# EUROPÄISCHE PATENTSCHRIFT

(11) **EP 2 872 712 B1**
(45) Veröffentlichungstag und Bekanntmachung des Hinweises auf die Patenterteilung: **25.11.2020**
(21) Anmeldenummer: 13734645.8
(22) Anmeldetag: 12.06.2013
(51) Int. Cl.: E04F 19/08, H02G 3/38

(54) **BAUSATZ FÜR DIE HERSTELLUNG VON BELÄGEN**
CONSTRUCTION KIT FOR PRODUCING COVERINGS
KIT DE CONSTRUCTION DESTINÉ À LA RÉALISATION DE REVÊTEMENTS

(30) Priorität: 10.07.2012 DE 102012106182
(43) Veröffentlichungstag der Anmeldung: 20.05.2015
(73) Patentinhaber: ArsRatio GmbH, 6322 Kirchbichl (AT)
(72) Erfinder: PERMESANG, Claus, 81667 München (DE)
(74) Vertreter: Patentanwälte Bernhardt / Wolff Partnerschaft mbB
(86) Internationale Anmeldenummer: PCT/DE2013/100212
(87) Internationale Veröffentlichungsnummer: WO 2014/008888

(56) Entgegenhaltungen:
- EP-A2- 0 428 065
- WO-A1-88/03207
- DE-U1- 9 207 318
- DE-U1-202005 014 362
- FR-A1- 2 645 566
- JP-U- S 638 327
- JP-U- H0 249 311
- US-A- 5 263 289
- US-A- 5 400 554
- US-A1- 2001 034 987

## Beschreibung

Die Erfindung betrifft einen Bausatz für die Herstellung von Belägen gemäß Oberbegriff des Anspruchs 1.

Ein aus DE 20 2005 014 362 U1 bekannter Bausatz für die Herstellung von Bodenbelägen umfasst Bauelemente, die zur Sichtfläche hin offene und mittels Abdeckelementen verschließbare Kabelkanäle aufweisen. In den Abdeckelementen kann zur Sichtseite des Bauelements hin ein sich öffnender Durchgang eingebracht sein, der zur Aufnahme einer Netzsteckdose eingerichtet ist.

US 5 400 554 A beschreibt einen Bausatz für die Herstellung von Bodenbelägen. Ein Bauelement, das randseitig gegen benachbarte Bauelemente anliegend verlegt wird, weist ein Sichtflächenelement auf, welches durch vier in seinen Ecken angeordnete Bolzen in Abstand von einer auf dem Boden liegenden Auflageplatte des Bauelements gehalten wird. Durch zwischen den Bolzen gebildete Verlegeräume verlaufen Kabel, die durch eine Öffnung in dem Sichtflächenelement nach außen geführt werden können.

Ein aus US 5 263 289 A bekannter Bausatz umfasst Bauelemente, die auf einer Unterseite eine zur Anlage gegen den Boden vorgesehene Tragstruktur aufweisen, die zum Boden hin geöffnete Kabelkanäle bildet. Außerdem ist in dem Bauelement eine Öffnung vorgesehen, durch die ein Kabel zur Versorgung einer auf der Sichtfläche oberhalb der Öffnung angeordneten Netzsteckdose hindurch geführt werden kann. In einer Ausführungsform weisen die Bauelemente senkrecht zueinander verlaufende, horizontale Kanäle auf, die in zwei Ebenen übereinander angeordnet sind. Zur Bildung einer Sichtfläche wird ein zusätzliches Abdeckelement benötigt.

US 2001/034 987 A1 beschreibt eine Doppelbodenkonstruktion, bei der randseitig aneinander angrenzend verlegte Bauelemente durch Stützelemente, die unterhalb von Ecken benachbarter Bauelemente angeordnet sind, in Abstand von einem Unterboden gehalten werden. Durch Öffnungen in den Bauelementen können Kabel durch die Doppelbodenkonstruktion nach oben hindurch geführt werden.

Aus FR 2 645 566 A1 gehen Bodenbelagbauelemente mit mehreren zueinander der parallelen zur Belagseite hin offenen Nutenkanälen für die Aufnahme elektrischer Leitungen hervor.

Eine in DE 92 07 318 U1 beschriebene Bodenverteilerdose wird mit dem Fußboden bündig abschließend in einen Montageraum in dem Boden eingesetzt.

Bei den genannten Bauelementen handelt es sich im einfachsten Fall um Platten wie Steinplatten oder Fliesen. Die aneinandergrenzend verlegten Bauelemente können aber auch Einrichtungen zur randseitigen Verbindung untereinander aufweisen und z.B. aneinander einrasten, wie dies in der WO 2005/040521 A2 beschrieben ist.

Aus der JP S638327 J gehen plattenförmige Belagbauelemente mit zum Boden vorstehenden Fußteilen hervor. Die symmetrisch zu den Plattenmittellinien angeordneten Fußteile sind Hohlräume gebildet, durch die hindurch Kabel verlegbar sind.

JP H0249311 U stellt den nächstliegende Stand der Technik dar und offenbart einen Bausatz für die Herstellung von Bodenbelägen, aus eine rechteckige Platte mit einer Sicht- und einer Auflageseite aufweisenden Bauelementen, die randseitig aneinander angrenzend zu verlegen sind, wobei der Bausatz Bauelemente mit zwei zueinander senkrechten, die Platte vollständig durchquerenden Kanälen in Form zu der Auflageseite hin offener Nuten für die Aufnahme elektrischer Leitungen umfasst und der Bausatz ferner mindestens ein solches Bauelement aufweist, das einen mit den Kanälen verbundenen, zu der Sichtseite hin offenen Durchgang für die Bildung eines elektrischen Anschlusses aufweist, wobei die beiden zueinander senkrechten, das Bauelement vollständig durchquerenden Kanäle, gegebenenfalls unterbrochen bei dem Durchgang, jeweils parallel und im Abstand zu einer Mittelachse der Platte und zu dem zu der Mittelachse parallelen Plattenrand verlaufen, wobei sich der Durchgang durch das gesamte Bauelement hindurch erstreckt und einen Durchmesser aufweist, der größer als die Breite der Kanäle ist, und wobei der Durchgang in Abstand zu den Mittelachsen in einem Eckenbereich des Bauelements angeordnet ist.

Ein Bausatz mit Bauelementen der eingangs erwähnten Art geht aus der WO 88/03207 A1 hervor. Sich senkrecht kreuzende, zur Verlegung von Kabeln nutzbare Kanäle erstrecken sich symmetrisch zu den Plattenmittelinien. Insbesondere Beläge aus letzteren Bauelementen lassen sich bei Bedarf schnell herstellen und abbauen und sind daher insbesondere zur vorübergehenden Verlegung z.B. in Messe- oder anderen Veranstaltungsräumen geeignet.

Durch die vorliegende Erfindung wird ein neuer Bausatz gemäß Anspruch 1 für die Herstellung von Belägen, insbesondere Bodenbelägen, geschaffen.

Ein solcher Bausatz erleichtert erheblich den Aufwand für Elektroinstallationen, die insbesondere bei der vorrübergehenden Verletzung von Boden- oder/ und Wandbelägen in vielen Fällen erforderlich sind. Notwendige Kabel werden innerhalb des Belags in dem genannten Kanal verlegt und durch den Durchgang hindurch von außen kontaktiert.

In Ausgestaltung der Erfindung umfasst der Bausatz Bauelemente, die nur einen Kanal aufweisen. Zweckmäßig können solche Bauelemente dazu verwendet werden, einen langen sich über eine Vielzahl von Bauelementen erstreckenden Kabelkanal zu bilden, der am Ende dann in den Kanal eines solchen Bauelements einmündet, das einen Durchgang zum Herausführen der elektrischen Leitungen aufweist.

In einer weiteren Ausführungsform verläuft die Nut am Rand des Bauelements. Durch diesen Verlauf der Nut lässt sich das Bauelement durch eine bodennahe Armierung stabilisieren, die bei Verlauf der Nut weiter innen durch die Nut unterbrochen und damit wirkungslos würde.

Die Öffnung des Durchgangs auf der Sichtseite des Bauelements kann durch ein Abdeckelement, vorzugsweise flüssigkeitsdicht, verschließbar sein, wenn kein elektrischer Anschluss benötigt wird. Zweckmäßig ist dieses Abdeckelement im eingebauten Zustand befahr- und begehbar.

Vorzugsweise ist der Durchgang durch eine wenigstens zur Sichtseite des Bauelements hin offene Ausnehmung gebildet, in welche der Kanal seitlich einmündet.

An der Öffnung des Durchgangs kann auf der Sichtseite des Bauelements ein mit in dem Kanal verlegten elektrischen Leitungen verbindbares, insbesondere eine Steckdose umfassendes Anschlusselement anbringbar sein, wobei der Durchgang zweckmäßig einen wenigstens ein Verbindungselement, insbesondere einen Flachstecker, zur Verbindung der elektrischen Leitungen mit dem Anschlusselement aufnehmenden Anschlussraum bildet.

Das Anschlusselement kann mit dem Verbindungselement über flexible Leitungen verbindbar sein.

Insbesondere letztere Verbindung erlaubt eine vorteilhafte Anbringung des Anschlusselements an der Öffnung über einen durch Drehung des Anschlusselements schließbaren Verschluss, insbesondere einen Bajonettverschluss. Vorteilhaft lässt sich mit geringem Aufwand nach Entfernung der obengenannten Abdeckung ein solches Anschlusselement an einer Durchgangsöffnung mit geringem Aufwand anbringen und so eine z.B. Netzstrom liefernde Steckdose installieren. Sehr vorteilhaft kann der Belag folglich dünner als die zur Unterbringung einer Netzsteckdose erforderliche Bauhöhe sein. Dass das bei Bedarf mit geringem Aufwand installierbare, eine Netzsteckdose umfassende Anschlusselement von dem Belag nach oben vorsteht, stellt keinerlei Nachteil dar.

In weiterer Ausgestaltung der Erfindung kann das Anschlusselement ein mit sich an den Durchgang im Bauelement anschließenden Durchgang für die Verlegung von Schwachstromleitungen aufweisen. Das betrifft insbesondere mit einem Computer oder Telekommunikationseinrichtungen verbindbare Leitungen.

Das Anschlusselement kann als Anschlussdose mit wenigstens einer Randausnehmung am oberen Rand zum Herausführen von Leitungen ausgebildet sein. Die vorzugsweise flüssigkeitsdicht von der genannten Öffnung anbringbare Dose bildet durch ihre Höhe einen bei Bodenreinigung vorteilhaften Spritz- und Schwallwasserschutz.

In weiterer Ausgestaltung der Erfindung können in einem durch Bauelemente ohne Kanal und Durchgang gebildeten Belag ausgewählte Bauelemente ohne Abbau der an diese angrenzenden Bauelemente durch Bauelemente mit Kanal und ggf. Durchgang ersetzt werden. Vorteilhaft kann auf diese Weise mit geringem Aufwand ein installationsfreier Belag mit einer Elektroinstallation nachgerüstet werden.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein Bauelement eines erfindungsgemäßen Bausatzes für die Herstellung von Boden- und/oder Wandbelägen,
- Fig. 2: an dem Bauelement von Fig. 1 anbringbare elektrische Verbindungs- und Anschlusselemente in perspektivischer Explosionsdarstellung,
- Fig. 3: die Verbindungs- und Anschlusselemente von Fig. 2 in verschiedenen Seitenansichten, und
- Fig. 4: die Anschlusselemente von Fig. 2 im zusammengesetzten Zustand in verschiedenen Seitenansichten.

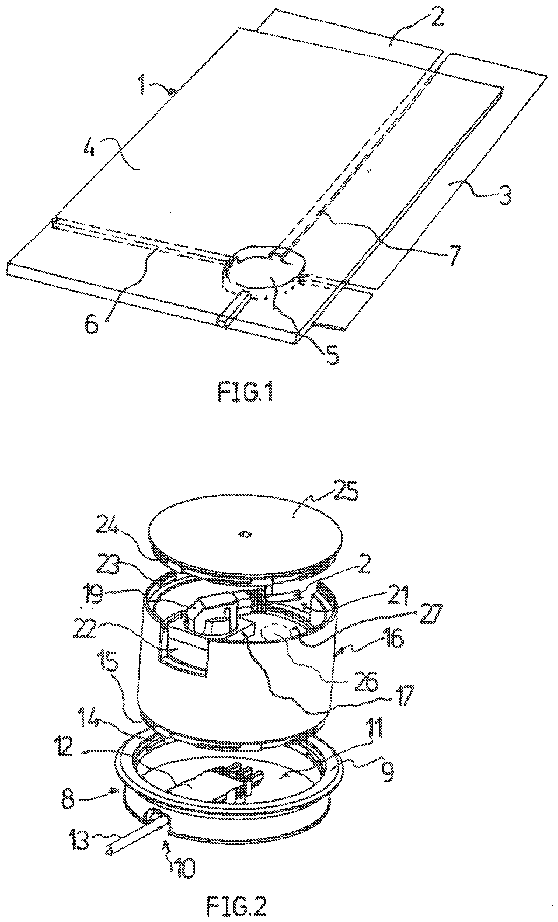

Ein Bauelement zur Herstellung eines Boden- und/oder Wandbelags umfasst eine rechteckige Platte 1, von der an zwei zueinander senkrechten Plattenseiten Verbindungslaschen 2 und 3 vorstehen. Über die Verbindungslaschen 2,3 ist das Bauelement mit randseitig angrenzenden weiteren solchen Bauelementen unter Bildung des Boden- oder/und Wandbelages verbindbar. Die Verbindungslaschen 2,3 schließen bündig mit der Auflagefläche des Bauelements ab. Fig. 1 zeigt die der Auflagefläche abgewandte dekorative Sichtfläche 4.

In der ggf. mehrschichtigen Platte 1 ist ein zur Sicht- und Auflagefläche hin offener Durchgang 5 gebildet, in den seitlich zur Auflagefläche des Bauelements hin offene, die Platte 1 in zueinander senkrechten Richtungen vollständig durchquerende Nutenkanäle 6 und 7 einmünden.

Das in Fig. 1 gezeigte Bauelement ist Bestandteil eines Bausatzes, der neben weiteren solchen Bauelementen auch Bauelemente nur mit den Nutenkanälen 6,7 ohne den Durchgang 5 und darüber hinaus hauptsächlich Bauelemente ohne den Durchgang und ohne die Nutenkanäle umfasst.

Aus Fig. 2 geht ein in den Durchgang 5 einzusetzender und dort z.B. durch Klebung zu fixierender Einsatz 8 mit einem Flansch 9 hervor, der in Form eines Rings oder alternativ einer Schale mit Boden ausgebildet sein kann, und wenigstens eine Öffnung 10 aufweist, die zu einer der Einmündungen der Nutenkanäle 6,7 auszurichten ist.

Der Einsatz 8 bildet einen Anschlussraum 11, in dem ein Flachstecker 12 Platz hat, welcher mit einem durch den Kanal 6 oder 7 zugeführten Netzstromkabel 13 verbunden ist.

Wie Fig. 2 ferner erkennen lässt, umfasst der Einsatz 8 nach innen vorstehende Nasen 14 zur Bildung eines Bajonettverschlusses, durch den der Einsatz 8 mit einem entsprechende Nasen 15 aufweisenden Anschlusselement 16 verbindbar ist.

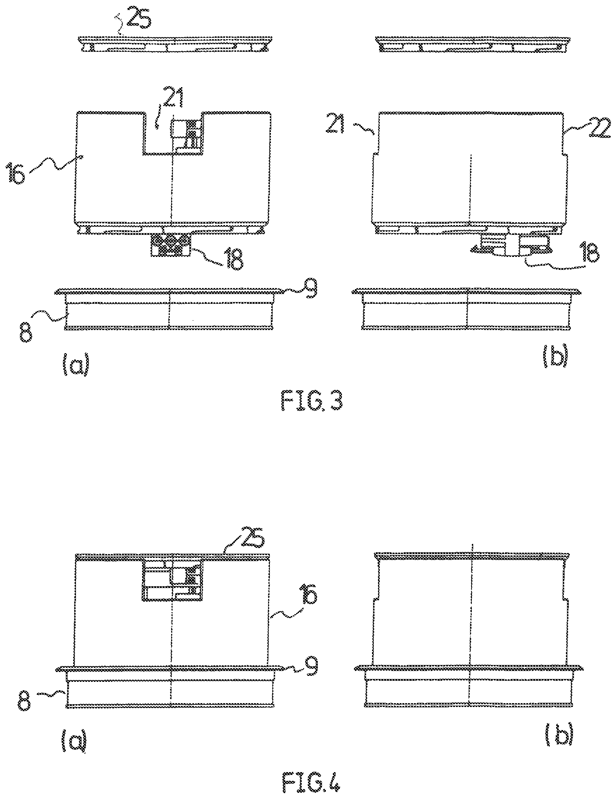

Das Anschlusselement 16 umfasst eine Netzsteckdose 17, deren Kontakte mit einem nur in Fig. 3 sichtbaren Steckverbindungselement 18 in Verbindung stehen, in das der Flachstecker 12 einsteckbar ist. In dem gezeigten Beispiel steckt in der Netzsteckdose 17 ein Winkelstecker 19 mit einem Steckerkabel 20. Das Steckerkabel 20 lässt sich durch eine Randausnehmung 21 oder alternativ eine der Randausnehmung 21 gegenüberliegende Randausnehmung 22 nach außen aus dem Anschlusselement 16 herausführen.

Am oberen Rand nach innen vorstehende Nasen 23 bilden mit Nasen 24 einer Abdeckplatte 25 einen Bajonettverschluss, durch den sich die Abdeckplatte 25 auf dem Anschlusselement 16 befestigen lässt. Die Abdeckplatte 25 kann ferner zur Abdeckung des Einsatzes 8 dienen, solange dieser nicht für die Verbindung mit dem Anschlusselement 16 genutzt wird.

Mit einer Strichlinie 26 ist in Fig. 2 ein Durchgang in einer die Steckdose 17 aufnehmenden Zwischenplatte 27 des Anschlusselements 16 angedeutet, durch den hindurch über einen der Nutenkanäle 6,7 zugeführte Schwachstromleitungen verlegt und dann durch die Randausnehmung 21 oder 22 nach außen geführt werden können.

Zur Herstellung eines elektrischen Anschlusses wird zunächst die Abdeckplatte 25 von dem Einsatz 8 unter Lösen des durch die Nasen 14 und 24 gebildete Bajonettverschlusses entfernt. Der in dem Anschlussraum 11 vorhandene Flachstecker 12 wird darauf in das Steckverbindungselement 18 des Anschlusselements 16 eingeführt. Das Netzkabel 13 ist in dem Nutenkanal 6 oder 7 flexibel und der Flachstecker 12 für den Einsteckvorgang daher genügend beweglich. Ebenso erlaubt es diese Flexibilität des Netzkabels danach das Anschlusselement 16 mit Hilfe des durch die Nasen 15 und 16 gebildeten Bajonettverschlusses an dem Einsatz 8 unter Drehung zu befestigen. Gegebenenfalls wurden vorher dem durch den bei 26 angebildeten Durchgang in der Zwischenplatte 27 des Anschlusselements 16 hindurch Schwachstromleitungen verlegt. Nach Anschließen eines Winkelsteckers 19 kann dann die Abdeckplatte 25 mit Hilfe des durch die Nasen 23,24 gebildeten Bajonettverschlusses auf dem Anschlusselement 16 befestigt werden.

## Patentansprüche

1. Bausatz für die Herstellung von Belägen, insbesondere Bodenbelägen, aus eine rechteckige Platte (1) mit einer Sicht- und einer Auflageseite aufweisenden Bauelementen, die randseitig aneinander angrenzend zu verlegen sind und über von der Platte (1) abstehende Laschen (2,3) miteinander verbindbar sind, wobei der Bausatz Bauelemente mit nur zwei zueinander senkrechten, die Platte (1) und jeweils eine der Laschen (2,3) vollständig durchquerenden Kanälen (6,7) in Form zu der Auflageseite hin offener Nuten für die Aufnahme elektrischer Leitungen umfasst und der Bausatz ferner mindestens ein solches Bauelement aufweist, das einen mit den Kanälen (6,7) verbundenen, zu der Sichtseite hin offenen Durchgang (5) für die Bildung eines elektrischen Anschlusses (8,16) aufweist, wobei die beiden zueinander senkrechten, das Bauelement vollständig durchquerenden Kanäle (6,7), gegebenenfalls unterbrochen bei dem Durchgang, jeweils parallel und im Abstand zu einer Mittelachse der Platte (1) und zu dem zu der Mittelachse parallelen Plattenrand verlaufen, wobei sich der Durchgang (5) durch das gesamte Bauelement (1) hindurch erstreckt und einen Durchmesser aufweist, der größer als die Breite der Kanäle (6,7) ist, und wobei der Durchgang (5) in Abstand zu den Mittelachsen in einem Eckenbereich des Bauelements angeordnet ist.

2. Bausatz nach Anspruch 1,
**dadurch gekennzeichnet,**
**dass** der Kanal jeweils an dem Plattenrand verläuft.

3. Bausatz nach Anspruch 1 oder 2,
**dadurch gekennzeichnet,**
**dass** die Öffnung des Durchgangs (5) auf der Sichtseite des Bauelements durch ein Abdeckelement (25) verschließbar, ggf. flüssigkeitsdicht verschließbar, ist.

4. Bausatz nach Anspruch 3,
**dadurch gekennzeichnet,**
**dass** das Abdeckelement (25) begeh- und befahrbar ist.

5. Bausatz nach einem der Ansprüche 1 bis 4,
**dadurch gekennzeichnet,**
**dass** der Durchgang durch eine mit einem Einsatz (8) ausgekleidete Ausnehmung (5), in welche die Kanäle (6,7) seitlich einmünden, gebildet ist.

6. Bausatz nach einem der Ansprüche 1 bis 5,
**dadurch gekennzeichnet,**
**dass** an der Öffnung des Durchgangs auf der Sichtseite des Bauelements ein mit einer in dem Kanal (6,7) verlegten elektrischen Leitung (13) verbindbares, insbesondere eine Steckdose (17) umfassendes Anschlusselement (16) anbringbar ist.

7. Bausatz nach Anspruch 6,
**dadurch gekennzeichnet,**
**dass** der Durchgang einen wenigstens ein Verbindungselement, insbesondere einen Flachstecker (12) zur Verbindung den elektrischen Leitungen (13) mit dem Anschlusselement (16), aufnehmenden Anschlussraum (11) bildet.

8. Bausatz nach Anspruch 7,
**dadurch gekennzeichnet,**
**dass** das Verbindungselement (12) in dem Anschlussraum (11) beweglich ist.

9. Bausatz nach einem der Ansprüche 6 bis 8,
**dadurch gekennzeichnet,**
**dass** sich das Anschlusselement (16) an der Öffnung über einen durch Drehung des Anschlusselements schließbaren Verschluss, insbesondere einen Bajonettverschluss (14,15), befestigen lässt.

10. Bausatz nach einem der Ansprüche 6 bis 9,
**dadurch gekennzeichnet,**
**dass** das Anschlusselement (16) ein Netzstrom lieferndes Anschlusselement ist.

11. Bausatz nach einem der Ansprüche 6 bis 10,
**dadurch gekennzeichnet,**
**dass** das Anschlusselement (10) einen den Durchgang fortsetzenden Durchgang (20) für die Verlegung von Schwachstromleitungen umfasst.

12. Bausatz nach einem der Ansprüche 6 bis 11,
**dadurch gekennzeichnet,**
**dass** das Anschlusselement (16) als Anschlussdose mit wenigstens einer Randausnehmung (21,22) am oberen Rand zum Herausführen von Leitungen ausgebildet ist.

## Claims

1. Construction kit for producing coverings, in particular floor coverings, from construction elements which comprise a rectangular panel (1) with a visible side and a bearing side, are to be laid adjoining one another at the edges and can be connected to one another via tabs (2, 3) projecting from the panel (1), wherein the construction kit comprises construction elements having only two mutually perpendicular ducts (6, 7), which completely traverse the panel (1) and in each case one of the tabs (2, 3), in the form of grooves, which are open to the bearing side, for receiving electrical lines, and the construction kit further comprises at least one such construction element which has a passage (5) which is connected to the ducts (6, 7), is open to the visible side and is intended for forming an electrical connection (8, 16), wherein the two mutually perpendicular ducts (6, 7) which completely traverse the construction element and are, where appropriate, interrupted at the passage each run parallel to and at a distance from a central axis of the panel (1) and from the panel edge which is parallel to the central axis, wherein the passage (5) extends through the entire construction element (1) and has a diameter which is larger than the width of the ducts (6, 7), and wherein the passage (5) is arranged at a distance from the central axes in a corner region of the construction element.

2. Construction kit according to Claim 1,
**characterized**
**in that** the duct in each case runs at the panel edge.

3. Construction kit according to Claim 1 or 2,
**characterized**
**in that** the opening of the passage (5) can be closed, where appropriate closed in a liquid-tight manner, on the visible side of the construction element by a covering element (25).

4. Construction kit according to Claim 3,
**characterized**
**in that** the covering element (25) can be walked and driven over.

5. Construction kit according to one of Claims 1 to 4,
**characterized**
**in that** the passage is formed by a cutout (5) which is lined with an insert (8) and into which the ducts (6, 7) open laterally.

6. Construction kit according to one of Claims 1 to 5,
**characterized**
**in that** a connection element (16), which can be connected to an electrical line (13) laid in the duct (6, 7) and in particular comprises a plug socket (17), can be mounted on the opening of the passage on the visible side of the construction element.

7. Construction kit according to Claim 6,
**characterized**
**in that** the passage forms a connection space (11) which receives at least one connecting element, in particular a flat plug (12) for connecting the electrical lines (13) to the connection element (16) .

8. Construction kit according to Claim 7,
**characterized**
**in that** the connecting element (12) is movable in the connection space (11).

9. Construction kit according to one of Claims 6 to 8,
**characterized**
**in that** the connection element (16) can be fastened to the opening via a closure, in particular a bayonet closure (14, 15), which can be closed by rotating the connection element.

10. Construction kit according to one of Claims 6 to 9,
**characterized**
**in that** the connection element (16) is a connection element delivering a mains current.

11. Construction kit according to one of Claims 6 to 10,
**characterized**
**in that** the connection element (10) comprises a passage-continuing passage (20) for laying light-current lines.

12. Construction kit according to one of Claims 6 to 11,
**characterized**
**in that** the connection element (16) is formed as a connection socket with at least one edge cutout (21, 22) at the upper edge for leading out lines.

## Revendications

1. Kit de construction destiné à la réalisation de revêtements, en particulier de revêtements de sol, à partir d'éléments de construction comprenant une plaque rectangulaire (1) ayant un côté visible et un côté de pose et destinés à être posés de façon adjacente les uns aux autres du côté bords et susceptibles d'être reliés entre eux par des pattes (2, 3) faisant saillie de la plaque (1), le kit de construction comprenant des éléments de construction présentant seulement deux canaux (6, 7) perpendiculaires l'un à l'autre et traversant complètement la plaque (1) et respectivement l'une des pattes (2, 3), et réalisés sous la forme de rainures ouvertes vers le côté pose et destinées à recevoir des lignes électriques, le kit de construction comprenant en outre au moins un élément de construction de ce type qui présente une traversée (5) reliée aux canaux (6, 7) et ouverte vers le côté visible pour former une connexion électrique (8, 16),
dans lequel
les deux canaux (6, 7) perpendiculaires l'un à l'autre et traversant complètement l'élément de construction s'étendent parallèlement et à distance d'un axe central de la plaque (1) et du bord de plaque parallèle à l'axe central en étant le cas échéant interrompus par la traversée,
la traversée (5) s'étend à travers la totalité de l'élément de construction (1) et présente un diamètre supérieur à la largeur des canaux (6, 7), et
la traversée (5) est disposée à distance des axes centraux dans une zone de coin de l'élément de construction.

2. Kit de construction selon la revendication 1,
**caractérisé en ce que**
le canal s'étend respectivement au niveau du bord de la plaque.

3. Kit de construction selon la revendication 1 ou 2,
**caractérisé en ce que**
l'ouverture de la traversée (5) sur le côté visible de l'élément de construction peut être refermée par un élément de couverture (25), le cas échéant être refermée de façon étanche aux liquides.

4. Kit de construction selon la revendication 3,
**caractérisé en ce que**
l'élément de couverture (25) permet l'accès aux piétons et aux véhicules.

5. Kit de construction selon l'une des revendications 1 à 4,
**caractérisé en ce que**
la traversée est formée par un évidement (5), habillé d'un insert (8), évidement dans lequel débouchent latéralement les canaux (6, 7).

6. Kit de construction selon l'une des revendications 1 à 5,
**caractérisé en ce que**
un élément de connexion (16) pouvant être relié à une ligne électrique (13) posée dans le canal (6, 7) et comprenant en particulier une prise électrique (17) peut être fixé à l'ouverture de la traversée sur le côté visible de l'élément de construction.

7. Kit de construction selon la revendication 6,
**caractérisé en ce que**
la traversée forme un espace de raccordement (11) recevant au moins un élément de connexion, en particulier une fiche plate (12) pour le raccordement des lignes électriques (13) à l'élément de connexion (16).

8. Kit de construction selon la revendication 7,
**caractérisé en ce que**
l'élément de connexion (12) est mobile dans l'espace de raccordement (11).

9. Kit de construction selon l'une des revendications 6 à 8,
**caractérisé en ce que**
l'élément de connexion (16) peut être fixé à l'ouverture par une fermeture, en particulier une fermeture à baïonnette (14, 15), qui peut être fermée par rotation de l'élément de connexion.

10. Kit de construction selon l'une des revendications 6 à 9,
**caractérisé en ce que**
l'élément de connexion (16) est un élément de connexion qui alimente le courant du réseau.

11. Kit de construction selon l'une des revendications 6 à 10,
**caractérisé en ce que**
l'élément de connexion (10) comporte une traversée (20) prolongeant la traversée pour la pose des lignes à courant faible.

12. Kit de construction selon l'une des revendications 6 à 11,
**caractérisé en ce que**
l'élément de connexion (16) est réalisé comme une boîte de connexion ayant au moins un évidement de bord (21, 22) sur le bord supérieur pour la sortie des lignes.
